# FASCICULE DE BREVET EUROPEEN

(11) **EP 1 097 567 B1**
(45) Date de publication et mention de la délivrance du brevet: **23.11.2005**
(21) Numéro de dépôt: 99929502.5
(22) Date de dépôt: 19.07.1999
(51) Int. Cl.: H04M 17/00, H04M 1/66

(54) **APPAREIL TELEPHONIQUE EQUIPE DE MOYENS DE NUMEROTATION AUTOMATIQUE**
TELEFONGERÄT MIT AUTOMATISCHER NUMMERNWAHL
TELEPHONE EQUIPPED WITH AUTOMATIC DIALLING MEANS

(30) Priorité: 20.07.1998 FR 9809228
(43) Date de publication de la demande: 09.05.2001
(73) Titulaire: FRANCE TELECOM, 75015 Paris (FR)
(72) Inventeur: GOY, Philippe, Jean, F-75014 Paris (FR)
(74) Mandataire: Habasque, Etienne J. Jean-François
(86) Numéro de dépôt international: PCT/FR1999/001759
(87) Numéro de publication internationale: WO 2000/005870

(56) Documents cités:
- WO-A-96/31971
- WO-A-98/21874
- FR-A- 2 749 424
- US-A- 4 706 275

## Description

La présente invention se rapporte à un appareil téléphonique, du type téléphone à carte, particulièrement adapté pour être utilisé dans des sites privés.

Un appareil téléphonique de ce type comporte, de façon classique, un combiné téléphonique et des moyens de numérotation pour l'appel d'un correspondant par l'intermédiaire d'un centre serveur assurant la mise en communication dudit appareil avec l'appareil du correspondant appelé, en fonction du coût de la communication et d'un crédit d'appel.

Il permet à un abonné d'une ligne téléphonique de mettre un téléphone à la disposition du propriétaire d'une carte de paiement sans avoir à se préoccuper de la facturation des appels, les communications étant débitées directement sur la carte ou sur un compte associé à cette dernière, en fonction du type de carte utilisée.

Les téléphones à carte connus doivent être raccordés au réseau de publiphonie, ce qui engendre des coûts d'exploitation relativement importants.

En outre, ils ne peuvent être raccordés à un concentrateur d'appel d'un central téléphonique, ce qui en limite considérablement les débouchés commerciaux, dans la mesure où ils ne conviennent pas, par exemple, aux hôtels ou aux hôpitaux qui voudraient équiper leurs chambres de ce type d'appareils.

D'autres appareils téléphoniques de ce type utilisent des cartes dites "prépayées" vendues avec un crédit de communication équivalent à leur valeur faciale, lequel crédit est centralisé sur un compte associé à la carte au niveau du centre serveur.

Les cartes comportent des indications portant sur le numéro d'appel du centre serveur et sur un numéro de code caché par une pellicule, par exemple pelable.

Ces appareils téléphoniques s'utilisent en composant le numéro d'appel du centre serveur, le numéro de code inscrit sur la carte et le numéro du correspondant que l'on désire appeler.

Ils sont susceptibles d'être raccordés à tout type de ligne analogique mais présentent cependant un certain nombre d'inconvénients, notamment en raison du fait qu'ils nécessitent de composer un nombre de chiffres très important à chaque appel, que les cartes ne sont pas rechargeables, et qu'ils nécessitent l'achat d'une carte à l'avance.

Le document WO-A-96 31 971 décrit un système d'accès à un réseau téléphonique utilisant un lecteur de carte distinct d'un appareil téléphonique, reliés acoustiquement entre eux.

Le document WO-A-98 21 874 décrit un système et un procédé de service de télécommunication prépayés.

Enfin, ils n'offrent pas un niveau de sécurité satisfaisant, dans la mesure où un tiers peut utiliser la carte à l'insu de son propriétaire.

Le but de l'invention est de pallier ces inconvénients.

Elle a donc pour but un appareil téléphonique du type comprenant un combiné téléphonique et des moyens de numérotation pour l'appel d'un correspondant par l'intermédiaire d'un centre serveur assurant la mise en communication dudit appareil avec l'appareil du correspondant appelé, en fonction du coût de la communication et d'un crédit d'appel, caractérisé en ce qu'il comporte un lecteur de cartes de paiement de communications téléphoniques relié à un micro-contrôleur et des moyens de mise en communication automatique, après introduction d'une carte dans le lecteur, de l'appareil téléphonique avec le centre serveur.

L'appareil téléphonique selon l'invention peut en outre comporter une ou plusieurs des caractéristiques suivantes, prises isolément ou selon toutes les combinaisons techniquement possibles :
- les moyens de mise en communication automatique comportent, stocké dans une mémoire associée au micro-contrôleur, un algorithme de composition automatique du numéro du centre serveur ;
- l'appareil comporte des moyens de transfert d'une somme correspondant au crédit d'appel vers le centre serveur, sur un compte associé à la carte ;
- l'appareil comporte en outre un afficheur relié au micro-contrôleur pour l'affichage d'informations relatives à la communication établie entre ledit appareil et l'appareil du correspondant appelé ; et
- il comporte des moyens de raccordement de l'appareil à un concentrateur d'appel d'un central téléphonique.

L'invention a également pour objet un système de télécommunication téléphonique, comprenant, raccordés à un réseau téléphonique câblé, un ensemble d'appareils téléphoniques et un centre serveur de mise en communication d'un appareil téléphonique appelant avec un appareil téléphonique appelé, en fonction du coût d'une communication téléphonique et d'un crédit d'appel, caractérisé en ce qu'au moins l'appareil téléphonique appelant est constitué par un appareil téléphonique tel que défini ci-dessus.

De préférence, le système comporte, stocké dans le centre serveur, un algorithme d'authentification de la carte de paiement.

La carte de paiement étant constituée par une carte à puce de paiement destinée à créditer un compte prévu dans le centre serveur, le système comporte avantageusement des moyens d'authentification électronique des transactions effectuées.

L'invention a en outre pour objet un procédé de mise en communication d'au moins deux appareils téléphoniques d'un système de télécommunication tel que défini ci-dessus, caractérisé en ce qu'il comporte les étapes consistant à :
- détecter l'insertion d'une carte de paiement de communications téléphoniques dans un lecteur de cartes équipant l'appareil téléphonique appelant ;
- établir une communication téléphonique automatique avec un centre serveur de mise en communication de l'appareil téléphonique appelant avec l'appareil téléphonique du correspondant appelé ;
- authentifier la carte ;
- transférer une somme correspondant à un crédit d'appel vers le serveur, sur un compte associé à ladite carte ;
- établir une communication téléphonique entre l'appareil téléphonique appelant et l'appareil téléphonique du correspondant appelé ; et
- maintenir la communication téléphonique entre lesdits appareils téléphoniques appelant et appelé tant que le crédit d'appel du compte n'est pas épuisé.
   Ce procédé comporte, de préférence, une étape consistant à transférer un crédit d'appel de la carte de paiement vers le compte associé à cette dernière au cours de la liaison téléphonique entre les appareils appelant et appelé.
   D'autres caractéristiques et avantages ressortiront de la description suivante, donnée uniquement à titre d'exemple, et faite en référence aux dessins annexés sur lesquels
- la figure 1 est un schéma synoptique illustrant la structure de l'appareil téléphonique selon l'invention ;
- la figure 2 est un schéma synoptique montrant la constitution du système de communication utilisant des appareils de la figure 1 ;
- la figure 3 est un organigramme du fonctionnement du système de télécommunication de la figure 2 ; et
- la figure 4 est un organigramme illustrant le déroulement d'une procédure de rechargement d'un compte prévu dans le centre serveur.

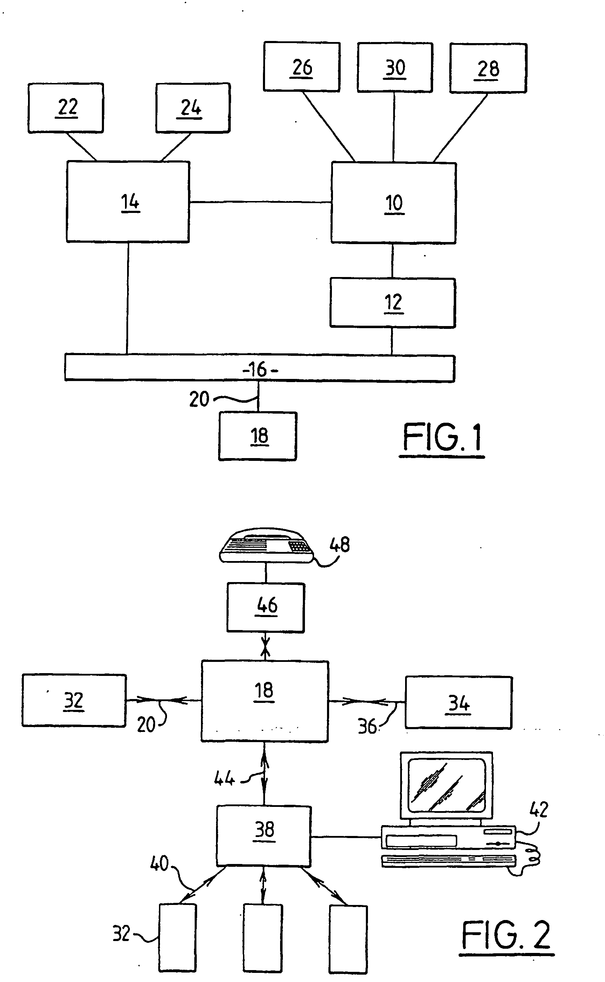

En référence à la figure 1, l'appareil téléphonique comprend, disposé dans un boîtier, un micro-contrôleur 10 raccordé, de façon classique, à un circuit modulateur-démodulateur 12 et à un circuit de téléphonie 14, de type classique, connecté à une interface 16 assurant la liaison de l'appareil avec un réseau téléphonique commuté 18, par l'intermédiaire d'une ligne téléphonique analogique 20.

Comme cela est classique, le circuit de téléphonie 14 assure la numérotation, conjointement avec le micro-contrôleur 10, et est raccordé à un combiné téléphonique 22 équipé d'un microphone et d'un écouteur (non représentés) et à un circuit d'émission de sonnerie 24 approprié pour l'émission d'une mélodie en cas de réception d'un appel téléphonique.

Par ailleurs, le micro-contrôleur 10 est pourvu d'un espace mémoire comprenant une mémoire morte, par exemple de type EPROM et une mémoire vive (non représentée).

Il est raccordé à un clavier 26 destiné à la composition de numéros téléphoniques de correspondants, à un lecteur 28 de cartes de paiement de communications et à un afficheur 30 adapté pour présenter à un utilisateur, sous le contrôle du micro-contrôleur 10, des informations portant par exemple sur le tarif d'une communication ou un crédit d'appel disponible.

Comme cela est visible sur la figure 2, le poste téléphonique qui vient d'être décrit, désigné par la référence numérique 32, raccordé au réseau téléphonique commuté 18 par l'intermédiaire de la ligne téléphonique analogique 20, est susceptible d'être mis en communication avec un centre serveur 34, auquel est affecté un numéro d'appel spécifique, le centre serveur 34 étant lui-même raccordé au réseau téléphonique commuté 18 par l'intermédiaire d'une ligne numérique 36.

Après établissement d'une liaison téléphonique entre l'appareil 32 et le centre serveur 34, ce dernier provoque la mise en communication de l'appareil 32 avec l'appareil d'un correspondant appelé, après composition du numéro du correspondant sur le clavier 26 et ce, en fonction du coût de la communication et d'un crédit d'appel disponible sur un compte associé à la carte au niveau du serveur.

Selon l'invention, le micro-contrôleur 10 comporte, stocké dans son espace mémoire, un algorithme de composition automatique du numéro du centre serveur 34 de manière à effectuer une mise en communication automatique de l'appareil téléphonique 32 avec le centre serveur, en coopération avec le circuit de téléphonie 14, après introduction d'une carte dans le lecteur 28.

Selon un premier mode de réalisation, le lecteur de carte 28 est constitué par un lecteur de cartes à puce, par exemple de cartes bancaires, de cartes prépayées de type "télécarte" ou "porte-monnaie électronique" ou autres types de cartes utilisées classiquement dans le domaine de la publiphonie.

En variante, le lecteur de carte 28 est constitué par un lecteur de cartes à piste magnétique classiques.

Comme mentionné précédemment, après détection de l'insertion d'une carte dans le lecteur 28, le micro-contrôleur 10 provoque l'établissement d'une liaison téléphonique avec le centre serveur 34, de préférence une liaison téléphonique gratuite.

Après authentification de la carte insérée dans le lecteur 28, le serveur 34 et le micro-contrôleur 10 provoquent conjointement le transfert d'une somme correspondant à un crédit d'appel de la carte de paiement ou, dans le cas d'une carte bancaire, du compte bancaire du porteur de cette dernière, vers un compte associé à la carte prévu dans le centre serveur 34, éventuellement après création de ce dernier.

Après composition d'un numéro téléphonique d'un correspondant, et établissement d'une communication téléphonique, le serveur 34 assure la gestion de la liaison téléphonique, en fonction de son coût, de manière à la maintenir tant que le crédit d'appel n'est pas épuisé dans le compte.

Il est ainsi possible de prévoir un service restreint selon lequel un certain nombre de numéros prédéterminés, tels que des numéros verts, des numéros d'urgence,... peuvent être obtenus directement, par composition sur le clavier 26, et selon lequel tous les autres numéros ne peuvent être obtenus que par l'intermédiaire du centre serveur 34.

Dans la description qui vient d'être faite, on a considéré que l'appareil téléphonique 32 est directement relié au réseau téléphonique commuté 18 par l'intermédiaire d'une ligne analogique 20 classique.

Il est également possible, en variante, et comme visible sur la figure 2, de raccorder l'appareil téléphonique 32 à un concentrateur d'appel (PABX) 38 d'un central téléphonique par l'intermédiaire d'une ligne analogique 40, le central téléphonique étant lui-même équipé d'un dispositif de configuration des lignes, constitué par un micro-ordinateur 42 approprié pour l'utilisation envisagée, par exemple capable de restreindre des appels vers l'extérieur à partir des postes 32.

Dans ce cas, le concentrateur d'appel 38 est raccordé au réseau téléphonique commuté 18 par l'intermédiaire d'une ligne numérique 44.

Par ailleurs, dans la description de l'appareil téléphonique faite en référence à la figure 1, le lecteur de carte 28 et l'afficheur 30 sont disposés sur l'appareil 32.

Il est également possible, en variante, et comme représenté sur la figure 2, de prévoir ces éléments sur un boîtier 46 séparé raccordé à un poste téléphonique 48 classique.

Dans ce cas, de préférence, un clavier additionnel, un circuit modulateur-démodulateur et un micro-contrôleur sont disposés dans le boîtier 46.

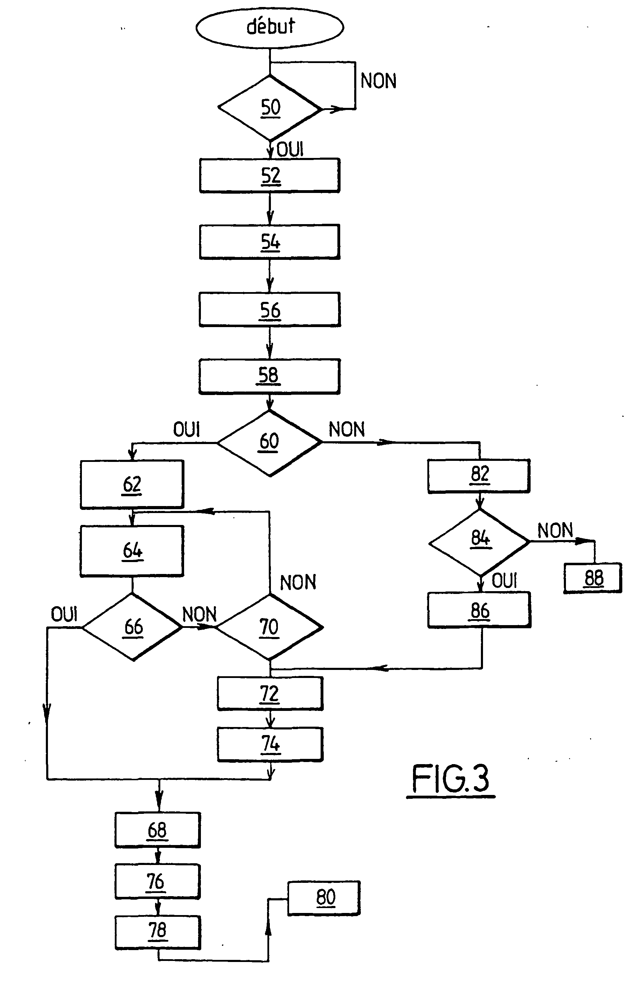

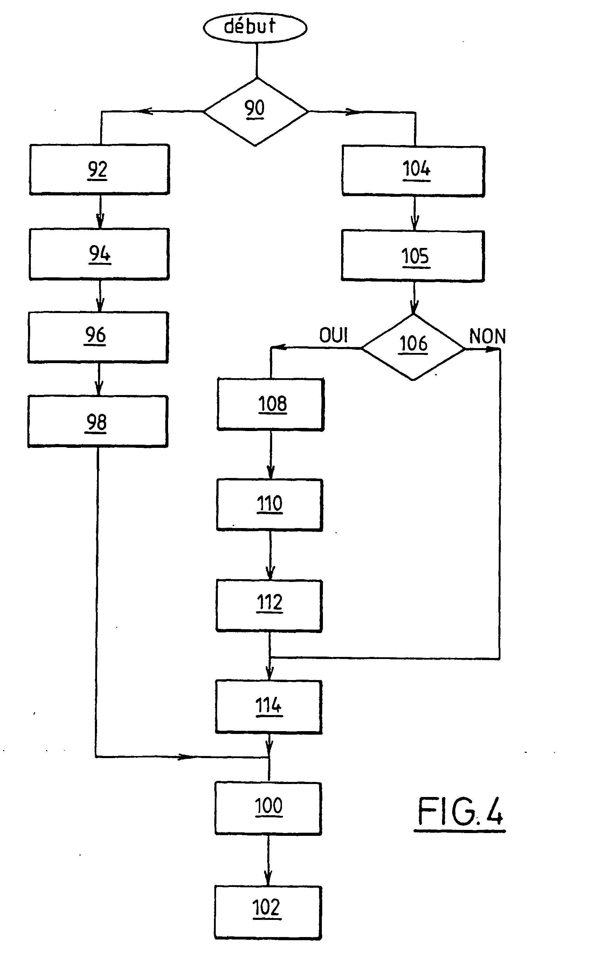

La description complète du fonctionnement de l'appareil téléphonique et du système de télécommunication qui viennent d'être décrits va maintenant être faite en référence aux figures 3 et 4.

En se référant tout d'abord à la figure 3, lors d'une première étape 50, le micro-contrôleur 10 effectue un test de manière à détecter un décroché et l'introduction d'une carte dans le lecteur 28.

Si tel est le cas, il provoque la composition automatique du numéro du centre serveur 34, au moyen du circuit de téléphonie 14 de manière à établir une liaison téléphonique avec le serveur (étape 52).

Lors de l'étape 54 suivante, le centre serveur 34 émet, en direction de l'appareil téléphonique 32, un message d'accueil, en utilisant la liaison téléphonique établie précédemment.

Lors des étapes 56 et 58 suivantes, le centre serveur 34 effectue une identification de la carte insérée dans le lecteur 28, et une authentification de la carte au moyen d'un algorithme d'authentification de type classique, approprié à la carte utilisée et stocké en mémoire, et recherche un compte éventuel associé à la carte identifiée.

Si, lors de l'étape 60 suivante, le centre serveur identifie un compte associé à la carte, il provoque l'affichage du solde du compte sur l'afficheur 30 de l'appareil téléphonique 32 (étape 62) puis provoque l'émission d'un message vocal invitant le titulaire de la carte à composer un numéro téléphonique ou à recharger le compte (étape 64).

Dans le cas où, lors de l'étape 66 suivante, le centre serveur 34 a détecté qu'un numéro a été composé sur le clavier 26, il provoque l'établissement d'une communication téléphonique (étape 68).

Si tel n'est pas le cas, si le serveur 34 détecte que le titulaire de la carte souhaite procéder à un rechargement ou à un chargement du compte (étape 70), le compte est rechargé ou chargé (étape 72) selon la procédure qui sera décrite en référence à la figure 4. Lors de l'étape 74 suivante, le centre serveur invite l'utilisateur à composer un numéro téléphonique.

Après établissement de la communication téléphonique par le centre serveur 34, lors de l'étape 76 suivante, ce dernier provoque l'affichage, sur l'afficheur 30, de la tarification de la communication puis effectue une décrémentation du compte en fonction de la durée et du coût de la communication (étape 78).

Lorsque le compte associé à la carte est épuisé, ou lorsque le serveur détecte un raccroché, ce dernier provoque la coupure de la liaison téléphonique (étape 80).

Lorsque, lors de l'étape 60 précédente, aucun compte existant n'a été identifié, lors de l'étape 82 suivante, le centre serveur 34 provoque l'émission d'un signal vocal invitant à créer le compte ou à obtenir des informations sur le service proposé.

Lors de l'étape 84 suivante, si le centre serveur détecte que l'utilisateur désire créer un compte, un nouveau compte associé à la carte insérée dans le lecteur est créé dans le centre serveur (étape 86).

Si tel n'est pas le cas, le centre serveur provoque l'émission d'un message contenant des informations relatives aux services proposés ainsi que la tarification correspondante (étape 88), sous forme de signaux vocaux ou affichés sur l'afficheur 30.

La description de la procédure de chargement ou de rechargement du compte mentionnée précédemment va maintenant être décrite en référence à la figure 4.

Cette procédure débute par une première étape 90 au cours de laquelle le centre serveur 34 contrôle le type de carte insérée dans le lecteur 28.

Dans le cas où, lors de cette étape 90, le serveur 34 détecte que la carte est constituée par une carte prépayée, par exemple de type "télécarte" ou "porte-monnaie électronique" , lors de l'étape 92 suivante, le solde, correspondant au crédit d'appel disponible sur la carte, est affiché sur l'afficheur 30, puis un message vocal est émis incitant l'utilisateur à entrer le nombre d'unités monétaires ou téléphoniques à créditer sur le compte (étape 94).

Au cours des étapes 96 et 98 suivantes, après saisie du nombre d'unités demandées sur le clavier 26 de l'appareil téléphonique 32, le centre serveur 34 enregistre une transaction monétique correspondant au nombre d'unités demandées. Cette transaction s'effectue avec authentification électronique et, éventuellement, avec transfert des unités sur un module de sécurité prévu au niveau du serveur.

La procédure se poursuit par une étape 100 lors de laquelle le nombre d'unités disponibles sur le compte associé à la carte est incrémenté, puis par une étape 102, lors de laquelle le nouveau solde est affiché sur l'afficheur 30.

Dans le cas où, lors de l'étape 90 précédente, le centre serveur 34 a détecté que la carte insérée dans le lecteur est constituée par une carte de crédit, lors de l'étape 104 suivante, un message vocal est émis invitant l'utilisateur à entrer le nombre d'unités monétaire à créditer sur le compte.

En variante, lors de cette étape 104, le compte est crédité d'un montant prédéterminé par le serveur et, en fin de communication, le serveur ajuste le montant de la transaction. Ainsi, l'utilisateur ne paie que le prix exact de sa communication sans devoir charger un compte au préalable.

Après saisie du nombre d'unités demandées sur le clavier 26 de l'appareil téléphonique 32 (étape 105), le centre serveur 34 procède à un test (étape 106) de manière à détecter si la carte de crédit est constituée par une carte à puce ou par une carte de type à piste magnétique.

Dans le cas où la carte est constituée par une carte à puce, lors de l'étape 108 suivante, on authentifie le porteur de la carte par contrôle du code confidentiel.

A l'issue de cette étape 108, la carte procède à un calcul de certificat à l'aide d'un algorithme de calcul approprié stocké dans la puce en utilisant un aléa fourni par le serveur (étape 110).

Lors de l'étape 112 suivante, la transaction monétique est transférée en direction du serveur.

Lors de l'étape 114 suivante, le centre serveur procède à une vérification de la transaction, éventuellement par consultation d'une liste de cartes en opposition ou par une demande d'autorisation auprès de l'organisme émetteur de la carte, et procède à un enregistrement de la transaction.

Dans la procédure décrite en référence à la figure 3, on a considéré que la communication est coupée dès que le compte n'est plus crédité. Il serait toutefois possible, en variante, de prévoir une phase de rechargement du compte, selon la procédure qui vient d'être décrite en référence à la figure 4, en mettant le correspondant en attente quelques instants.

## Revendications

1. Appareil téléphonique du type comprenant un combiné téléphonique (22) et des moyens de numérotation (14,26) pour l'appel d'un correspondant par l'intermédiaire d'un centre serveur (34) assurant la mise en communication dudit appareil avec l'appareil du correspondant appelé, en fonction du coût de la communication et d'un crédit d'appel, **caractérisé en ce qu'**il comporte un lecteur (28) de cartes de paiement de communications téléphoniques relié à un micro-contrôleur (10), et des moyens (10,14) de mise en communication automatique, après introduction d'une carte dans le lecteur (28), de l'appareil téléphonique avec le centre serveur.

2. Appareil selon la revendication 1, **caractérisé en ce que** les moyens de mise en communication automatique comportent, stocké dans une mémoire associée au micro-contrôleur (10), un algorithme de composition automatique du numéro du centre serveur.

3. Appareil selon l'une des revendications 1 et 2, **caractérisé en ce qu'**il comporte des moyens (10,28,34) de transfert d'une somme correspondant au crédit d'appel vers le centre serveur (34), sur un compte associé à la carte.

4. Appareil selon l'une quelconque des revendications 1 à 3, **caractérisé en ce qu'**il comporte en outre un afficheur (30) relié au micro-contrôleur (10) pour l'affichage d'informations relatives à la communication établie entre ledit appareil et l'appareil du correspondant appelé.

5. Appareil selon l'une quelconque des revendications 1 à 4, **caractérisé en ce qu'**il comporte des moyens de raccordement de l'appareil à un concentrateur d'appel (38) d'un central téléphonique.

6. Appareil selon l'une des revendications 4 et 5, **caractérisé en ce que** le lecteur de cartes à puce (28) et l'afficheur (30) sont disposés dans un boîtier (46) raccordé à un poste téléphonique (48).

7. Système de télécommunication téléphonique, comprenant, raccordés à un réseau téléphonique câblé (18), un ensemble d'appareils téléphoniques (32;46,48) et un centre serveur (34) de mise en communication d'un appareil téléphonique appelant avec un appareil téléphonique appelé, en fonction du coût d'une communication téléphonique et d'un crédit d'appel, **caractérisé en ce qu'**au moins l'appareil téléphonique appelant est constitué par un appareil téléphonique selon l'une quelconque des revendications 1 à 6.

8. Système selon la revendication 7, **caractérisé en ce qu'**il comporte, stocké dans le centre serveur (34), un algorithme d'authentification de la carte de paiement.

9. Système selon la revendication 7, **caractérisé en ce que**, la carte de paiement étant constituée par une carte à puce de paiement destinée à créditer un compte prévu dans le centre serveur (34), il comporte des moyens d'authentification électronique des transactions effectuées.

10. Système selon l'une quelconque des revendications 7 à 9, **caractérisé en ce qu'**une partie au moins desdits appareils est reliée à un concentrateur d'appel (38) d'un central téléphonique, lui-même raccordé au réseau téléphonique câblé (18) par une ligne téléphonique numérique (44).

11. Procédé de mise en communication d'au moins deux appareils téléphoniques d'un système de télécommunication selon l'une quelconque des revendications 7 à 10, **caractérisé en ce qu'**il comporte les étapes consistant à :
- détecter l'insertion d'une carte de paiement de communications téléphoniques dans un lecteur (28) de cartes équipant l'appareil téléphonique appelant ;
- établir une communication téléphonique automatique avec un centre serveur (34) de mise en communication de l'appareil téléphonique appelant avec l'appareil téléphonique du correspondant appelé ;
- authentifier la carte ;
- transférer une somme correspondant à un crédit d'appel vers le serveur (34), sur un compte associé à ladite carte ;
- établir une communication téléphonique entre l'appareil téléphonique appelant et l'appareil téléphonique du correspondant appelé ; et
- maintenir la communication téléphonique entre lesdits appareils téléphoniques appelant et appelé tant que le crédit d'appel du compte n'est pas épuisé.

12. Procédé selon la revendication 11, **caractérisé en ce qu'**il comporte en outre une étape consistant à transférer un crédit d'appel de la carte de paiement vers le compte associé à cette dernière au cours de la liaison téléphonique entre les appareils appelant et appelé.

13. Programme apte à être mis en oeuvre sur un appareil téléphonique pouvant communiquer avec un réseau téléphonique commuté (18), le programme comprenant un algorithme qui, lorsqu'il est exécuté, réalise une mise en communication automatique de l'appareil téléphonique (32) avec un centre serveur (34), après introduction d'une carte dans un lecteur (28) de l'appareil téléphonique (32).

## Patentansprüche

1. Telefonapparat der Art mit einer Telefonkombination (22) und Wählvorrichtungen (14, 26) zum Anrufen eines Gesprächsteilnehmers mit Hilfe eines Gastprozessors (34), welcher die Kommunikationsherstellung zwischen dem Apparat und dem Apparat des angerufenen Teilnehmers abhängig von den Kosten des Gesprächs und einem Gesprächsguthaben sicherstellt, **dadurch gekennzeichnet, dass** er einen Leser (28) für Bezahlkarten für Telefongespräche umfasst, der mit einem Mikrosteuerbaustein (10) verbunden ist, und Vorrichtungen (10, 14) zur automatischen Kommunikationsherstellung des Telefonapparates mit dem Gastprozessor nach dem Einführen einer Karte in den Leser (28).

2. Apparat gemäß Anspruch 1, **dadurch gekennzeichnet, dass** die Vorrichtungen zur automatischen Kommunikationsherstellung einen in einem mit dem Mikrosteuerbaustein (10) verbundenen Speicher gespeicherten Algorithmus zum automatischen Wählen der Nummer des Gastprozessors aufweisen.

3. Apparat gemäß einem der Ansprüche 1 und 2, **dadurch gekennzeichnet, dass** er Vorrichtungen (10, 28, 34) zum Überweisen einer dem Gesprächsguthaben entsprechenden Summe an den Gastprozessor (34) auf ein der Karte zugeordnetes Konto aufweist.

4. Apparat gemäß irgendeinem der Ansprüche 1 bis 3, **dadurch gekennzeichnet, dass** er außerdem eine mit dem Mikrosteuerbaustein (10) verbundene Anzeigevorrichtung (30) zum Anzeigen von Informationen bezüglich des zwischen dem Apparat und dem Apparat des angerufenen Teilnehmers hergestellten Gesprächs aufweist.

5. Apparat gemäß irgendeinem der Ansprüche 1 bis 4, **dadurch gekennzeichnet, dass** er Vorrichtungen zum Anschluss des Apparates an einen Anrufschrank (38) einer Telefonzentrale aufweist.

6. Apparat gemäß einem der Ansprüche 4 und 5, **dadurch gekennzeichnet, dass** der Chipkartenleser (28) und die Anzeigevorrichtung (30) in einem an die Telefonstation (48) angeschlossenen Gehäuse (46) angeordnet sind.

7. System zur telefonischen Telekommunikation mit einer Anordnung von Telefonapparaten (32; 46, 48), die an ein verkabeltes Telefonnetz (18) angeschlossen sind, und einem Gastprozessor (34) zur Herstellung einer Verbindung zwischen einem anrufenden Telefonapparat und einem angerufenen Telefonapparat, in Abhängigkeit von den Kosten eines Telefongesprächs und eines Gesprächsguthabens, **dadurch gekennzeichnet, dass** zumindest der anrufende Telefonapparat aus einem Telefonapparat gemäß irgendeinem der Ansprüche 1 bis 6 besteht.

8. System gemäß Anspruch 7, **dadurch gekennzeichnet, dass** es einen in dem Gastprozessor (34) gespeicherten Algorithmus zur Authentifizierung der Bezahlkarte aufweist.

9. System gemäß Anspruch 7, **dadurch gekennzeichnet, dass** es, da die Bezahlkarte von einer Chipbezahlkarte gebildet ist, die dafür bestimmt ist, ein in dem Gastprozessor (34) vorgesehenes Konto mit einem Guthaben zu füllen, Vorrichtungen zur elektronischen Authentifizierung der durchgeführten Zahlungsvorgänge aufweist.

10. System gemäß irgendeinem der Ansprüche 7 bis 9, **dadurch gekennzeichnet, dass** zumindest ein Teil der Apparate mit einem Anrufschrank (38) einer Teefonzentrale verbunden ist, welche selbst über eine digitale Telefonleitung (44) an das verkabelte Telefonnetz (18) angeschlossen ist.

11. Verfahren zur Kommunikationsherstellung zwischen zumindest zwei Telefonapparaten eines Telekommunikationssystems gemäß irgendeinem der Ansprüche 7 bis 10, **dadurch gekennzeichnet, dass** es die Schritte umfasst, die daraus bestehen:
- das Einführen einer Karte zum Bezahlen von Telfongesprächen in einen Kartenleser (28) zu erfassen, mit welchem der anrufende Telefonapparat ausgestattet ist;
- eine automatische Telefonverbindung mit einem Gastprozessor (34) zur Verbindungsherstellung zwischen dem anrufenden Telefonapparat und dem Telefonapparat des angerufenen Teilnehmers herzustellen;
- die Karte zu authentifizieren;
- eine einem Guthaben entsprechende Summe an den Prozessor (34) auf ein der Karte zugeordnetes Konto zu überweisen;
- eine Telefonverbindung zwischen dem anrufenden Telefonapparat und dem Telefonapparat des angerufenen Teilnehmers herzustellen; und
- die Telefonverbindung zwischen dem anrufenden und dem angerufenen Telfonapparat solange zu halten wie das Gesprächsguthaben des Kontos nicht verbraucht ist.

12. Verfahren gemäß Anspruch 11, **dadurch gekennzeichnet, dass** es außerdem einen Schritt aufweist, der daraus besteht, ein Gesprächsguthaben der Bezahlkarte auf das dieser letzteren zugeordnete Konto im Verlauf der Telefonverbindung zwischen dem anrufenden und dem angerufenen Apparat zu überweisen.

13. Programm, das in einem Telefonapparat eingesetzt werden kann, der mit einem geschalteten Telefonnetz (18) kommunizieren kann, wobei das Programm einen Algorithmus aufweist, der bei seiner Durchführung eine automatische Verbindungsherstellung des Telefonapparates (32) mit einem Gastprozessor (34) nach Einführen einer Karte in einen Leser (28) des Telefonapparates (32) bewirkt.

## Claims

1. Telephone device of the type comprising a telephone receiver (22) and dialling means (14,26) for calling a party by means of a server centre (34) ensuring the connection of the said device to the device of the party called, as a function of the cost of the communication and a call credit, **characterised in that** it comprises a reader (28) of telephone communication payment cards connected to a microcontroller (10) and means (10,14) of automatically connecting, after the insertion of a card in the reader (28), the telephone device to the server centre.

2. Device according to claim 1, **characterised in that** the automatic connection means comprise, stored in a memory associated with the microcontroller (10), an algorithm for automatically dialling the number of the server centre.

3. Device according to one of the claims 1 and 2, **characterised in that** it comprises means (10, 28, 34) of transferring a sum corresponding to the call credit to the server centre (34), into an account associated with the card.

4. Device according to any of claims 1 to 3, **characterised in that** it further comprises a display device (30) connected to the microcontroller (10) for displaying information concerning the connection established between the said device and the device of the party called.

5. Device according to any of claims 1 to 4, **characterised in that** it comprises means of connecting the device to a call concentrator (38) of a telephone centre.

6. Device according to one of claims 4 and 5, **characterised in that** the chip card reader (28) and the display device (30) are arranged in a casing (46) connected to a telephone set (48).

7. Telephone telecommunications system, comprising, connected to a cabled telephone network (18), a series of telephone devices (32, 46, 48) and a server centre (34) for connecting a calling telephone device to a called telephone device as a function of the cost of a telephone communication and a call credit, **characterised in that** at least the calling telephone device consists of a telephone device according to any of claims 1 to 6.

8. System according to claim 7, **characterised in that** it comprises, stored in the server centre (34), an algorithm for authenticating the payment card.

9. System according to claim 7, **characterised in that** the payment card consisting of a chip card intended to credit an account provided in the server centre (34), comprises means of electronically authenticating the transactions carried out.

10. System according to any of claims 7 to 9, **characterised in that** at least a part of the said devices is connected to a call concentrator (38) of a telephone centre, which is in turn connected to the cabled telephone network (18) by a digital telephone line (44).

11. Method for connecting at least two telephone devices of a telecommunications system according to any of claims 7 to 10, **characterised in that** it comprises steps consisting of:
- detecting the insertion of a telephone call payment card into a card reader (28) fitted to the calling telephone device;
- establishing an automatic telephone connection to a server centre (34) for connecting the calling telephone device to the telephone device of the party called;
- authenticating the card;
- transferring a sum corresponding to a call credit to the server (34), into an account associated with said card;
- establishing a telephone connection between the calling telephone device and the telephone device of the party called; and
- maintaining the telephone connection between the said calling and called telephone devices as long as the calling credit of the account is not exhausted.

12. Method according to claim 11, **characterised in that** it further comprises a step consisting of transferring a call credit from the payment card to the account associated with the said card during the telephone connection between the calling and called devices.

13. Program capable of being implemented in a telephone device that can communicate with a switched telephone network (18), the said program comprising an algorithm that, when it is executed, automatically connects the telephone device (32) to a server centre (34), after the insertion of a card in a reader (28) fitted to the telephone device (32).
